# EUROPEAN PATENT SPECIFICATION

(11) **EP 2 484 611 B1**
(45) Date of publication and mention of the grant of the patent: **09.09.2015**
(21) Application number: 12153647.8
(22) Date of filing: 02.02.2012
(51) Int. Cl.: B65G 47/28, B65B 57/06, B65G 47/84, B65B 9/067

(54) **Packaging machine and method**
Verpackungsmaschine und Verfahren
Machine et procédé de conditionnement

(30) Priority: 08.02.2011 IT BO20110053
(43) Date of publication of application: 08.08.2012
(73) Proprietor: CT Pack S.R.L., 40056 Crespellano (Bologna) (IT)
(72) Inventor: Mezzaro, Daniele, 44121 Ferrara (IT); Rosignoli, David, 44100 Pontegradella (Ferrara) (IT)
(74) Representative: Bianciardi, Ezio

(56) References cited:
- EP-A1- 0 084 299
- EP-A1- 0 813 494
- EP-A1- 1 123 886
- GB-A- 2 204 551
- NL-C1- 1 024 110
- US-A- 4 722 168
- US-A1- 2003 230 941
- US-A1- 2010 084 247

## Description

This invention relates to a packaging machine of the flow-pack type and a method for packaging a flow of articles.

As is known, packaging machines (of the flow-pack type) are designed to package individual articles or groups of articles fed into the machine.

One prior art packaging machine (of the flow-pack type) comprises a system for feeding a film (or packaging web) and a system for feeding the articles.

The film and article feed systems are designed to feed the film and the articles to a packaging station where the articles are packaged with the film (that is to say, the film is wrapped round the article and then cut and sealed to form a pack).

One of the needs felt when using machines of this kind is that of feeding the packaging station with equispaced articles (that is, articles at a uniform distance from each other).

The system for feeding the articles to the packaging station, however, receives from the machines or lines upstream of it articles which are not equispaced (that is to say, which are arbitrarily spaced from each other) and is therefore configured in such a way as to space them out equally and to release them to the packaging station equally spaced (that is to say, at a uniform distance from each other).

The article feed system of the machine comprises a plurality of conveyor belts placed one after the other to form a conveying path.

The conveyor belts are positioned in such a way that each conveyor releases the products onto another conveyor belt (downstream) and receives them from a conveyor belt (upstream); that way, a group of articles is conveyed by all the conveyor belts of the feed system for transfer to the packaging station.

In the machine, the speed of each belt is controlled and adjusted (as described in more detail below) and the machine comprises a plurality of sensors, associated with the belts to detect the passage of the articles through a certain region of each belt (each sensor makes available a signal indicating the passage of the articles).

In light of this, the machine comprises a control and drive unit which adjusts the speed of each conveyor belt as a function of the sensor signals, so that the groups of articles are released to the packaging machine (flow pack) according to a certain spacing.

Thus, the speed of each belt is adjusted in such a way that each article, as it travels along the conveying path of the feed system, is accelerated/decelerated by the different belts.

It should be noted, therefore, that the belts are driven at different speeds.

Feed systems of this kind extend for relatively great lengths (up to ten metres or even more) because the acceleration / deceleration that each belt can impart to the articles is rather limited on account of the need to prevent the articles from slipping on the surface of the belt (such slipping would prevent the control unit from precisely determining the position of the articles and would thus cause them to be released to the packaging station at non-uniform distances from each other).

Consequently, one drawback of machines of the type outlined above is that they necessitate a relatively long path for feeding the articles to the packaging station for the spacing of the groups of articles released to the packaging station to be satisfactorily controlled. That in turn makes the machines rather cumbersome and unsuitable for certain applications.

A prior art packaging machine with independently movable movers driven along a track is known from document US 2003 230 941, said document representing the closest prior art to the invention.

This invention therefore has for an aim to propose a packaging machine of the flow-pack type and a method for packaging articles which overcome the above mentioned disadvantages and, in particular, to propose a machine and a method which allow articles to be packaged in relatively limited spaces.

Another aim of this invention is to propose a machine for packaging articles which is simple and highly effective.

Yet another aim of the invention is to propose a machine for packaging articles which allows a flow of articles to be packaged regardless of how they are fed to the machine. Accordingly, this invention achieves that aim with a packaging machine and method comprising the technical features described in the appended claims.

The technical features of the invention, with reference to the above aims, are clearly described in the claims below and its advantages are more apparent from the detailed description which follows, with reference to the accompanying drawings which illustrate a preferred non-limiting example embodiment of the invention and in which:
- Figures 1 to 4 are schematic side views of packaging machine in different operating configurations;
- Figure 5 is a plan view of the machine Figures 1 to 4;
- Figures 6A, 6B and 6C are schematic cross sections of the machine through the section plane labelled VI-VI in Figure 5 and with some parts cut away in order to better illustrate others;
- Figure 7 is a schematic side view of the **packaging** machine of the invention.

With reference to the accompanying drawings, the numeral 1 denotes a machine for packaging articles A, in accordance with this invention.

It should be observed that the packaging machine 1 is a machine of the "flow pack" type.

The articles A are preferably, but not necessarily, food articles.

In this description, the term "article" is used to mean both a single product and a group of products arranged in a predetermined position relative to each other (preferably side by side). In effect, the packaging machine 1 can package in the same pack both a single article A and a group of articles (suitably arranged relative to each other).

The machine 1 for packaging articles A comprises feed means 4 for feeding a web of film N (usually of heat-sealable material) to a packaging station 5.

It should be noted that the film N defines, according to the invention, a web N for wrapping the article A to form a pack; thus, the terms "film" and "web" will hereinafter be used without distinction.

The packaging station 5 may be a packaging station of any type for a flow pack machine of known type.

The packaging station 5 thus comprises cutting means for cutting the wrapping web N and sealing means (not illustrated since they are of known type) for sealing the web N around the articles A).

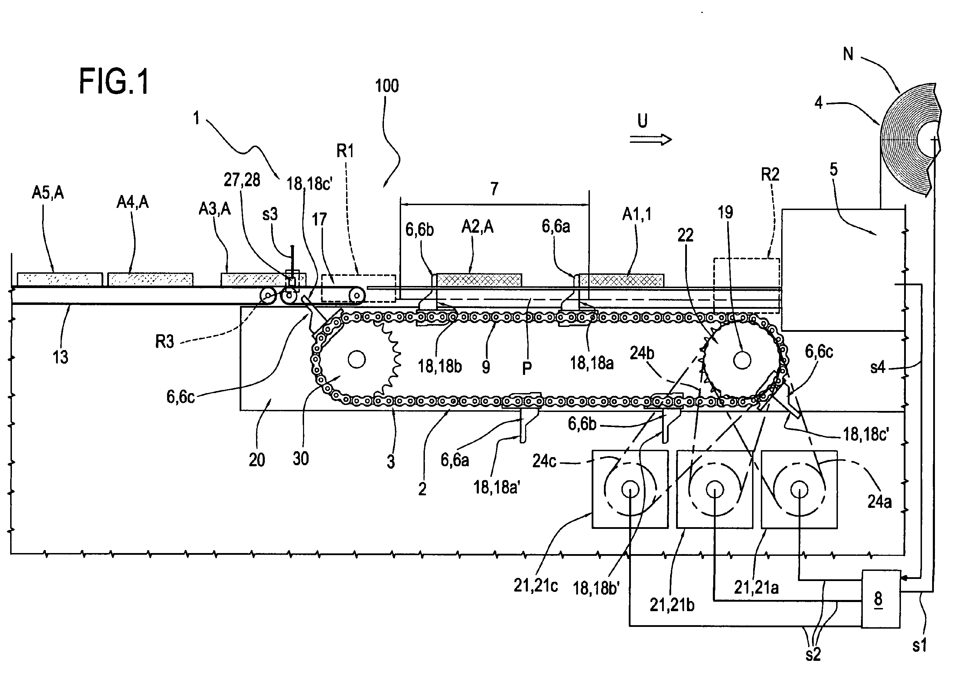

Preferably, the feed means 4 for feeding the web N comprise a roller for mounting a roll of web N (illustrated in Figure 1) and means for pulling the web N along a web N conveying path leading to the packaging station 5.

The machine 1 for packaging articles A further comprises a feed system, denoted in its entirety by the reference numeral 100, for feeding the articles A.

The feed system 100 for feeding the articles A comprises a conveying line 2 for conveying the articles A along a conveying path P.

It should be noticed that in the example illustrated the path P is a straight path.

The conveying line 2 is designed to transport the articles A towards the packaging station 5; therefore, the line 2 (preferably, but not necessarily) terminates at the packaging station 5.

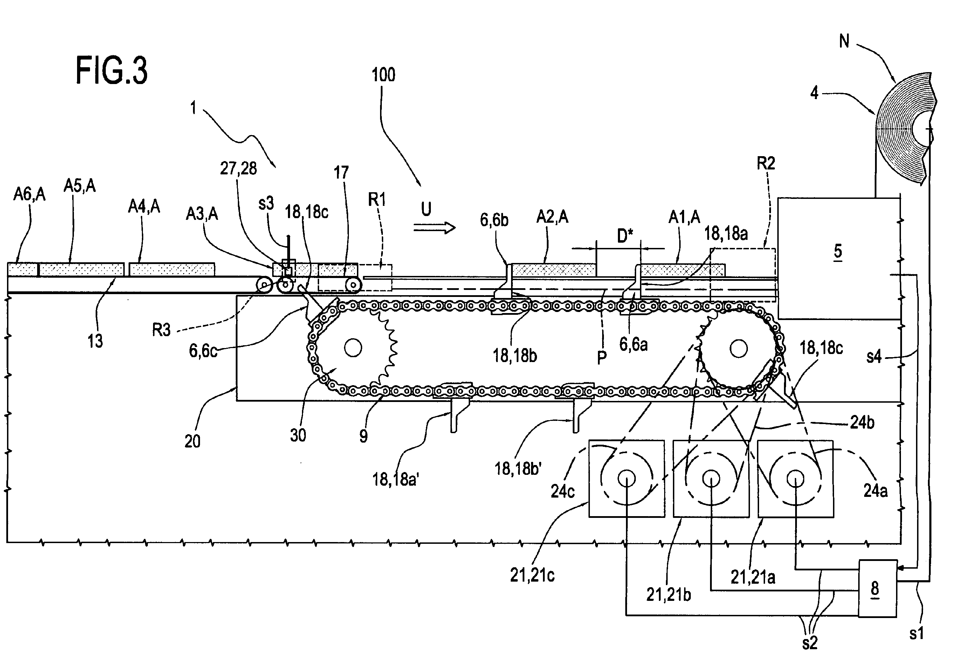

In the example illustrated in Figures 1 to 6C, the conveying line 2 comprises a plurality of conveyor units 3.

**Such example illustrated in** **figures 1****,****2****,****3****,****4****,****5****,** **6A****,****6B****,****6C** **is here described for a better understanding of the invention but it is not part of the invention for which protection is sought.**

More specifically, in the example illustrated in Figures 1 to 6C, the conveying line 2 comprises three article conveyor units 3, namely a first second and third conveyor unit 3a, 3b and 3c, respectively (hereinafter also referred to simply as first, a second and a third conveyor).

Each conveyor unit 3 is equipped with an endless chain 9 trained in a loop around a gear wheel 22 and a second gear wheel 30 (located at opposite ends of the loop).

The chain 9 of each conveyor 3 is driven by respective drive means.

In a variant **of the example of** **figures 1-6C** not illustrated **and which is not part of the present invention,** each conveyor 3 comprises a belt instead of the chain 9.

More specifically, it should be noted that in the rest of this description, the chain 9 of the first conveyor 3a will be referred to as first chain 9a, the chain 9 of the second conveyor 3b as second chain 9b and the chain 9 of the third conveyor 3c as third chain 9c.

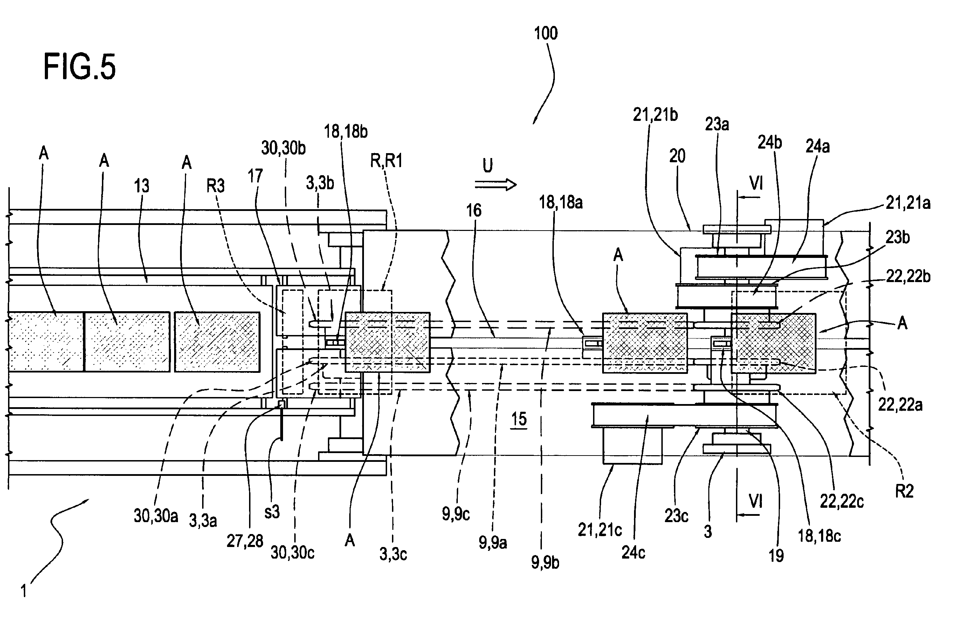

It should be noted (Figure 5) that the chain 9a of the first conveyor 3a, the chain 9b of the second conveyor 3b and the chain 9c of the third conveyor 3c are located alongside each other.

Each chain 9 has one or more abutment members 18 fixed to it. In the example illustrated in Figures 1 to 5, each chain 9 has two abutment members 18 fixed to it. More specifically, the abutment members 18 of each chain 9 are located in such a way as to divide the chain 9 itself into two equal lengths. In this regard, it should be noted that in the drawings, the abutment members fixed to the first chain 9a are labelled 18a and 18a', the abutment members fixed to the second chain 9b are labelled 18b and 18b' and the abutment members fixed to the third chain 9c are labelled 18c and 18c'.

Generally speaking, the abutment members 18 are stably fixed to the respective chain 9 and are moved as one with the chain 9 along the looped path defined by the chain itself (it should be noted that the conveying path P is a portion of the looped path).

The abutment members 18 are adapted to come into abutment with the articles A at a pickup zone or region R1 and convey them along the conveying path P to a release zone or region R2; it should be noted that the packaging station 5 is located at the release zone or region R2.

The conveying line 2 preferably comprises an article A supporting surface 15 on which the articles A are made to move along the conveying path P between the pickup zone R1 an the release zone R2 (it should be noted that the supporting surface 15 forms a conveyor surface for conveying the articles along the conveying path P).

In effect, as shown in Figures 1 to 6, the abutment members 18 push the articles A on the supporting surface 15 along the conveying path P.

More specifically, it may be observed (Figures 1 to 4) that each abutment member comes into contact with the back of an article A and pushes it along the conveying path P towards the release zone R2.

It should also be noted that the conveying path P of the articles A is the path followed by the abutment members 18 along the upper section of each chain 9 of the conveyor units 3.

More generally the conveyor units 3 and the respective abutment members 18 define means 6 for pushing and transferring the articles A from the pickup zone R1 and the release zone R2.

Thus, according to the example illustrated in the accompanying drawings, the machine 1 comprises a plurality of means 6 for pushing and transferring the articles A. More specifically, in the example illustrated in the accompanying drawings, the machine 1 comprises first, second and third pushing and transfer means 6a, 6b and 6c.

It should be noted that in one embodiment that is not illustrated in the drawings, the machine 1 comprises first and second pushing and transfer means.

According to the invention, the machine 1 comprises a control and drive unit 8, hereinafter also referred to as unit 8 or control unit 8.

The unit 8 is connected to the web N feed means 4 for receiving a signal s1 representing a speed v1 of web N feed. The unit 8 is also connected to the pushing and transfer means 6 for receiving a signal s2 representing the positions adopted by the pushing and transfer means 6.

More specifically, the signal s2 is a signal representing the positions adopted by the abutment members 18 of the first chain 9a, of the second chain 9b and of the third chain 9c in turn (this signal thus indicating the absolute positions of the abutment members 18 of the conveyors 3).

According to the invention, the conveying line 2 comprises a portion 7 of the conveying path P extending between the pickup zone R1 and the release zone R2 where the pushing and transfer means 6 advance with variable motion (that is to say, at a non-constant speed).

The machine 1 further comprises a first conveyor belt 17 located upstream of the conveyor units 3 for feeding the articles A to the latter.

The first conveyor belt 17 is in turn fed by a second conveyor belt 13.

The conveyor belt 17 and the conveyor belt 13 constitute, according to the invention, means for moving the articles A, adapted to feed the articles A to the conveyors 3.

More specifically, as may be observed in Figures 1 to 4, the articles A on the conveyor belt 13 are arbitrarily spaced (the spacing between them is not uniform).

The conveyor belt 17 is preferably driven at a higher speed than the conveyor belt 13 so as to increase the spacing between the articles A. That advantageously creates a gap between the articles A to allow the abutment members 18 to be inserted between two articles A in the pickup zone R1.

Below is a description of the structure of the conveyors 3.

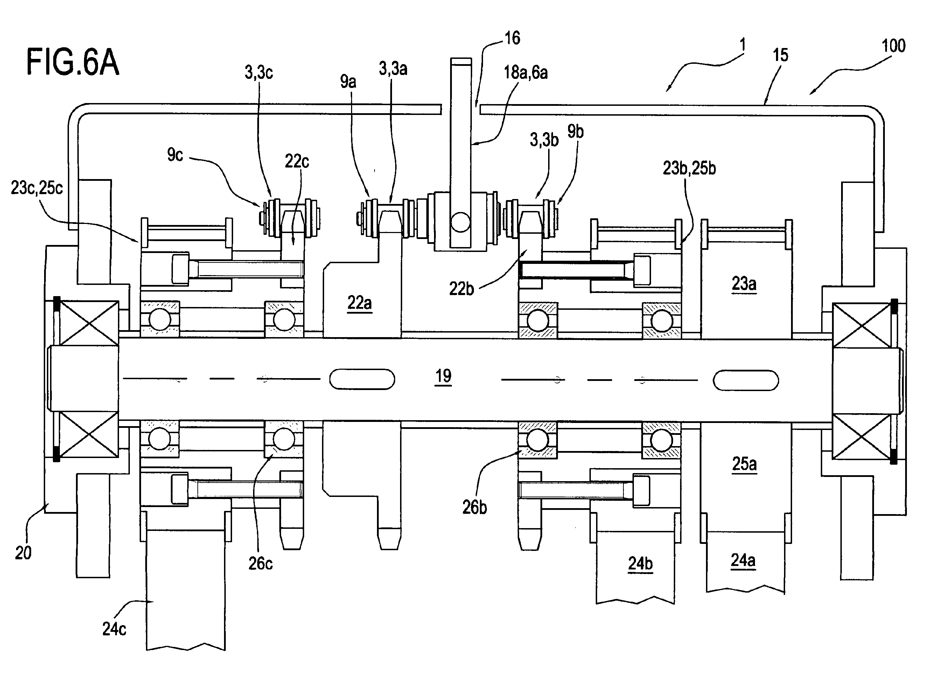

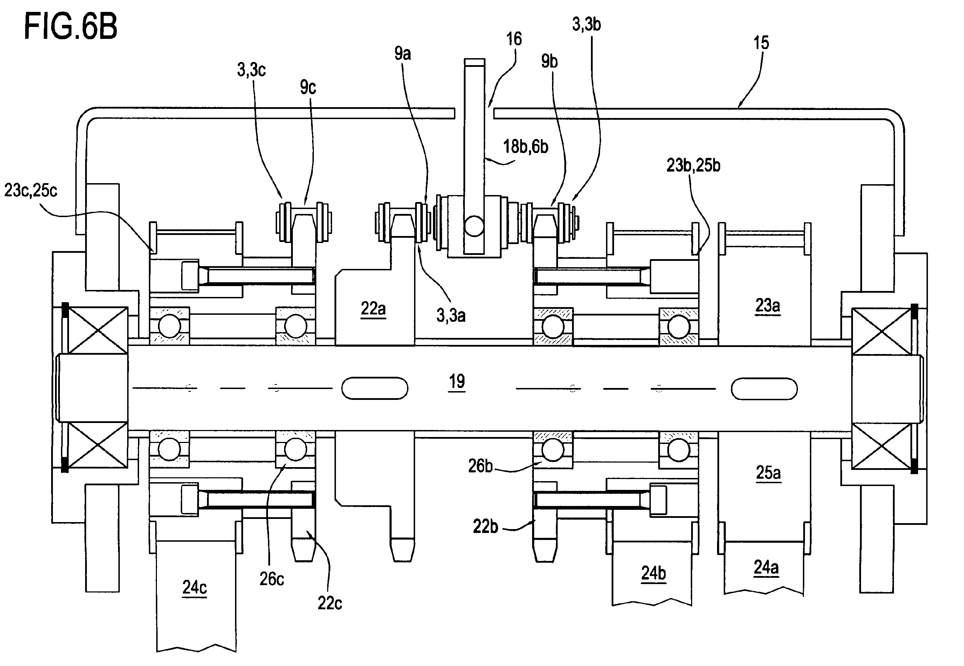

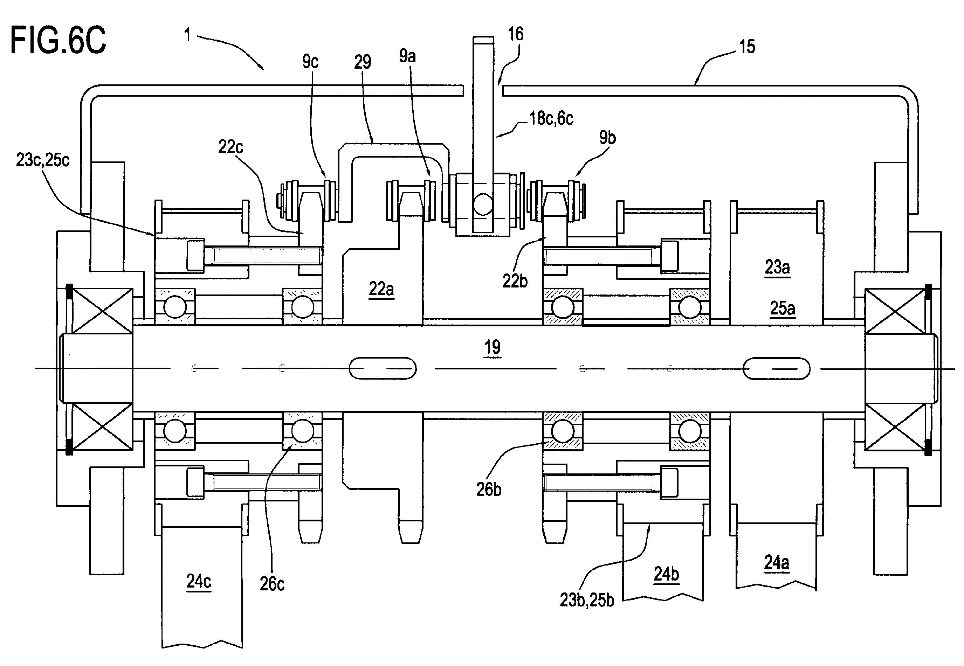

Figures 6A, 6B and 6C are cross sections of the conveyor units 3a, 3b and 3c of the conveying line 2 through the section plane VI-VI (that is, at the end of the conveying line 2).

More specifically, it should be noticed that in each of Figures 6A, 6B and 6C, some parts have been cut away to better illustrate others.

For example, Figure 6A shows only one of the abutment members 18a of the first chain 9a, Figure 6B one of the abutment members 18b of the second chain 9b and Figure 6C one of the abutment members 18c of the third chain 9c.

From Figures 6A, 6B and 6C and from Figure 5 the structure of the drive means of the conveyor units 3 may be inferred. More specifically, it should be noted that the conveying line 2 comprises a first drive shaft 19, mounted rotatably relative to the frame 20 of the machine 1, the shaft 19 being connected to a first motor 21a which rotationally drives it. As may be observed, the first drive shaft 19 mounts a first gear wheel 22a which engages the first chain 9a (the first gear wheel 22a is mounted to rotate as one with the first shaft 19) and a pulley 23a which engages the first motor 21a through a first belt 24a (the pulley 23a and the belt 24a form a first belt and pulley assembly 25a connecting the first motor 21a to the first shaft 19).

As may be observed, the first shaft 19 rotatably mounts a second gear wheel 22b and a third gear wheel 22c (these gear wheels 22b and 22c are mounted rotatably relative to the first shaft 19 through respective bearings 26b and 26c) which are engaged by the second chain 9b and the third chain 9c.

As may be observed, the second gear wheel 22b and the third gear wheel 22c are mounted rotatably about the first shaft 19 and each can rotate independently of the other.

As may also be observed, the second gear wheel 22b is connected stably to a second pulley 23b and a second belt 24b connects the second pulley 23b to a second motor 21b (the second pulley 23b and the second belt 24b form a second belt and pulley assembly 25b connecting the second motor 21b to the second gear wheel 22b).

Similarly, the third gear wheel 22c is connected stably to a third pulley 23c and a third belt 24c connects the third pulley 23c to a third motor 21c (the third pulley 23c and the third belt 24c form a third belt and pulley assembly 25c connecting the third motor 21c to the third gear wheel 22c). In light of this, and in more general terms, the following should be observed:
- the first drive shaft 19, the first gear wheel 22a, the first belt and pulley assembly 25a and the first motor 21a form first drive means for the first conveyor unit 3a;
- the second gear wheel 22b, the second belt and pulley assembly 25b and the second motor 21b form second drive means for the second conveyor unit 3b;
- the third gear wheel 22c, the third belt and pulley assembly 25c and the third motor 21c form third drive means for the third conveyor unit 3c.

More specifically, it should be noted that the first motor 21a, the second motor 21b and the third motor 21c can be driven independently of each other.

In other words, the first, second and third drive means are independent of each other.

It should be noted, therefore, that the provision of conveyor units 3 which are independent of one another allows the unit 8 to drive the abutment members 18 fixed to the different chains 9a, 9b and 9c independently of each other.

It should also be noted that the chain 9 of each conveyor 3 is trained not only around the gear wheel 22 but also around another gear wheel, labelled 30.

In Figure 5 the gear wheels 30 are individually labelled 30a (gear wheel of the first conveyor 3a), 30b (gear wheel of the second conveyor 3b) and 30c (gear wheel of the third conveyor 3c).

Thus, more generally, the chain 9 of each conveyor 3 is trained around a pair of gear wheels (22, 30).

The gear wheels (22, 30) of each conveyor 3 are rotatable relative to the frame 20 independently of the other conveyors 3. For example, the gear wheels 22a and 30a of the first conveyor 3a are rotatable independently of the gear wheels 22b, 30b, 22c and 30c.

The supporting surface 15 is provided with an opening 16, extending along the conveying direction of the articles A (the opening 16 is clearly shown in Figure 5).

The abutment members 18a and 18a', 18b and 18b', 18c and 18c' protrude through the opening 16 along the conveying path P. In effect, the abutment members 18 protrude through the opening so they can push the articles A along the supporting surface 15 from behind.

More specifically, it should be noted that the first abutment member 18a protruding from the opening 16 is shown in Figure 6a, the second abutment member 18b protruding from the opening 16 is shown in Figure 6b and the third abutment member 18c protruding from the opening 16 is shown in Figure 6c.

More specifically, it should also be noted that the third abutment member 18c, shown in Figure 6c, is fixed to the third chain 9c, by a C-shaped member 29, whilst the first abutment member 18a and the second abutment member 18b are fixed laterally to the respective chains 9.

The machine 1 also comprises a detecting means 28, preferably a sensor 27, located upstream of or in the pickup zone R1 and designed to detect an incoming article A.

It should be noted that the sensor 27 detects an article A in transit through a detection zone or region, labelled R3 in the accompanying drawings (this zone being upstream of, or at least partly superposed over, the pickup region R1).

The sensor 27 is connected to the control unit 8 to send a signal s3 indicating the entry of an article in the detection zone R3. Advantageously, the sensor 27 allows the unit 8 to detect an incoming article A at infeed to the conveyors 3.

Thus, according to this aspect, the sensor 27 constitutes detecting means 28 for the articles A designed to allow the incoming articles A to be detected as they reach the conveying line 2.

This aspect will become clearer as this description continues.

Described below is the operation of the machine 1 of figures 1-4. The description must be considered as an example, since the machine 1 may be driven according to methods and logics different from those described, depending on the speed v1 of web N feed, on the length of the conveying line 2, on the number of abutment members 18, and so on.

Figures 1 to 4 illustrate different operating steps of the machine 1. These drawings will be described to better understand the operation of the machine 1.

With reference to Figure 1, an abutment member 18a connected to the first chain 9a (hereinafter also referred to as first abutment member 18a) moves a first article A1 towards the release zone R2, and a second abutment member 18b connected to the second chain 9b (hereinafter also referred to as second abutment member 18b) moves a second article A2.

It should be noted that the second abutment member 18b is located downstream of the first abutment member 18a relative to the conveying direction of the articles A along the conveying path P (this direction being indicated by an arrow U) .

It should also be observed that the abutment members 18 of the first chain 9a, second chain 9b and third chain 9c are in turn cyclically positioned at the pickup zone R1 to pick up an incoming article A when it reaches the pickup zone R1. Thus, given a continuous flow of articles A fed to the conveying line 2, the abutment members 18 fixed to the first chain 9a, second chain 9b and third chain 9c each in turn engage an incoming article A as the latter reaches the pickup zone R1.

As may be observed in Figure 1, the abutment member 18c of the third chain 9c is in standby position waiting for an article A, that is to say, it is positioned at the pickup zone R1 waiting to engage the article A.

Starting from the operating configuration illustrated in Figure 1, the unit 8 drives the second abutment member 18b according to an accelerated law of motion so as to allow the second article A2 to be positioned at a given (or predetermined) distance D* from the first article.

It should be noted, therefore, that in the portion labelled 7 of the conveying path P, the second abutment member 18b advances with variable motion (that is to say, at a non-constant speed).

Hence, in the portion 7 of the path P, the second abutment member 18b is driven at a different(preferably higher) speed from that of the first abutment member 18a.

In light of this, it should be noted that the abutment member in transit in the portion 7 of the path P is driven at a relative speed different from that of the abutment member preceding it along the path P so as to impart a predetermined distance D* (or release spacing D*) between the articles being conveyed by the abutment members 18.

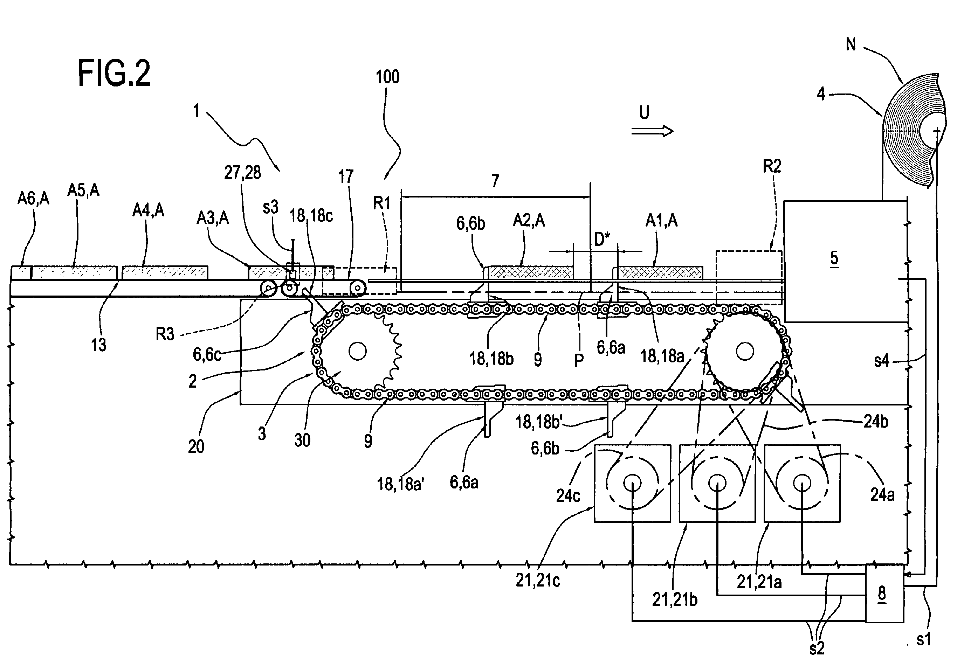

Figure 2 shows the first abutment member 18a and the second abutment member 18b at a position further forward than the one shown in Figure 1. It should be noticed that at this position, the first article A1 and the second article A2 are separated from each other by the distance D*.

The distance D* corresponds to the spacing between the articles A when they are released to the packaging station. Thus, the distance D* will hereinafter also be referred to as release spacing.

The distance D* corresponds to a preselected distance considered optimal to allow correct packaging of the articles at the packaging station 5; and in effect, in this regard, as may be observed in Figures 2, 3 and 4 (which represent successive operating configurations of the machine 1), the articles A1 and A2 conveyed by the first and second abutment members 18a and 18b, respectively, are spaced from one another by the distance D*.

Thus, more in general, it may be observed that after an abutment member 18 has been accelerated / decelerated in the portion 7 of the path P where it is advanced with variable motion, the unit 8 moves that abutment member 18 in such a way that the preselected distance D* is maintained even in the next stretch of the conveying line 2 (that is to say, in such a way that the articles A are released according to the spacing D*, coordinated with the packaging station 5).

In light of this, starting from the aforementioned condition where the article conveyed has been set at a preselected distance D* from the one preceding it and with reference to Figures 2 to 4, the unit 8 drives the conveyor units 3a and 3b in such a way as to keep the speed of the second abutment member 18b equal to the speed of the first abutment member 18a. That makes it possible to maintain unchanged the distance D* between the article A1 conveyed by the first abutment member 18a and the article A2 conveyed by the second abutment member 18b.

It should be noted that the articles A are released in coordination with the packaging station 5, that is to say, each article is released at the same release point of the release region R2, at a given moment in time dependent on a phase signal s4 of the packaging station 5.

The phase signal s4 is a signal representing the cyclic position of the film N cutting means in the packaging station 5. More preferably, the signal s4 is a periodic signal (that is, the cutting means have substantially constant motion).

In other words, the signal s4 constitutes an operating phase signal of the packaging station 5.

It should be noted that the control and drive unit 8 receives the phase signal s4 and accordingly activates the pushing and transfer means 6 in such a way as to release the articles A in the release zone R2 as a function of the phase signal s4 (that is to say, in coordination with the packaging station 5) .

The passage of an article A into the detection zone R3 of the sensor 27 (that article A being transported by the conveyor belt 27) causes the third conveyor unit 3c to be activated, thereby moving the abutment member 18c fixed to the third chain 9c (or the next abutment member to reach the pickup zone R2), hereinafter referred to as third abutment member 18c.

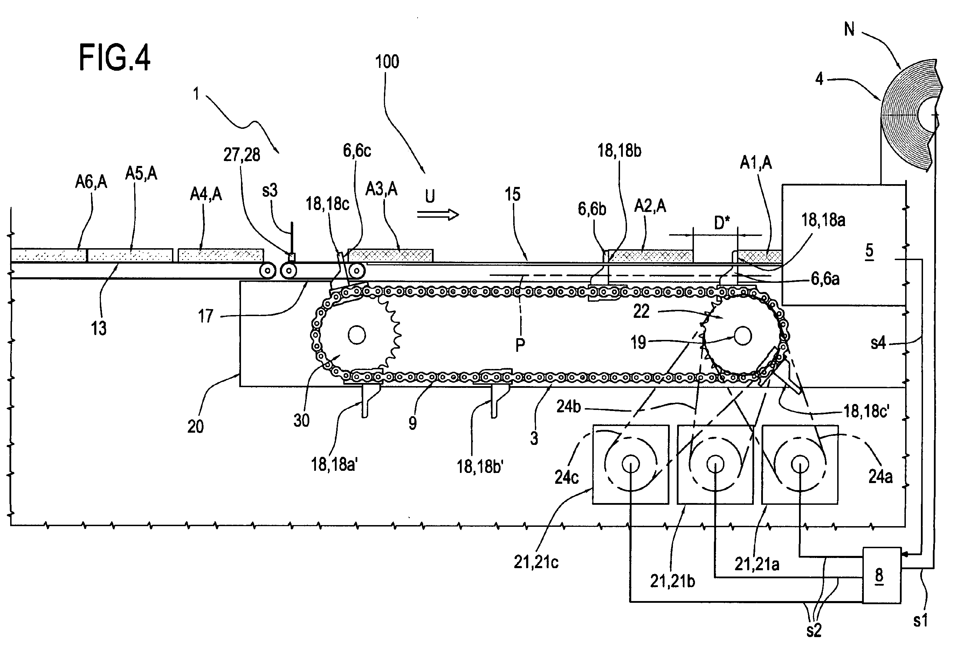

Preferably, the unit 8 is programmed to set the third abutment member 18c (or, more generally, the abutment member located at the infeed of the pickup zone R1) in motion from the standby position as a function of the signal indicating that an incoming article A has reached the detection zone R3. More specifically, it should be noted that in the configuration illustrated in Figure 4, the third abutment member 18c is in motion (about to engage the article A3) and is no longer in standby position as in Figures 1 and 2.

It should also be noted that the above description is purely an example and must not be construed as limiting the invention.

In effect, the abutment member 18c at the infeed to the pickup zone R1 might not stop in standby position (but, for example, might be slowed down at the pickup zone R1 or might not slow down at all at the zone R1).

Generally speaking, the mode of driving / moving the abutment member 18c at the pickup zone R1 depends on the feed speed of the web N and on other factors.

Moreover, during the change of web N feed speed, that is to say, in a transient situation, the operation of the conveying line 2 might be different from that described above.

More generally, according to the invention, the unit 8 sets the abutment members 18 in motion in such a way that at a portion 7 of the conveying path P, each abutment member 18 advances with variable motion (preferably accelerated).

It should be noted that, preferably, the first conveyor belt 17 is driven at a linear speed just higher than the web N feed speed v1, whilst the second belt 13 is driven at a linear speed just lower than the web N feed speed v1. The conveyor units 3 of the conveying line 2 are driven, as described above, in such a way as to space the articles according to the spacing D*.

Also, preferably, at the release zone R2, the conveyors 3 are driven at a speed just higher than the web N feed speed v1 (so as to release the article A to the packaging station at a controlled speed just higher than that of the web N).

In a variant not illustrated of the conveyor units 3 **of** **figures 1-6C** **(which variant is not part of the present invention)**, each conveyor unit 3 comprises, instead of an endless chain trained in a closed loop, an open chain (that is to say, a chain with two unconnected ends) driven reciprocatingly between the pickup zone R1 and the release zone R2.

It should be noted that the reciprocating motion of the chain determines the reciprocating motion of the abutment member fixed to the chain. More specifically, the abutment member is driven along a forward stroke from the pickup zone R1 to the release zone R2 to convey an article A and along a return stroke from the release zone R2 to the pickup zone R1 after the article A has been released.

Thus, according to this variant, the abutment member is reciprocatingly movable between the pickup zone R1 and the release zone R2.

It should be noted that, preferably, according to this variant, the article A abutment member is movable between an operating configuration and a non-operating configuration. More specifically, the abutment member is in the operating position when it conveys the article A (during the forward stroke from the zone R1 to the zone R2) and in the non-operating position during the return stroke from the release zone R2 to the pickup zone R1.

In other words, the non-operating position of the abutment member means that the abutment member, during the return stroke, does not interfere with the abutment members fixed to the other chains. In the operating position, on the other hand, the abutment member is positioned in such a way that it can come into abutment with and push the article A along the conveying path P towards the packaging station 5.

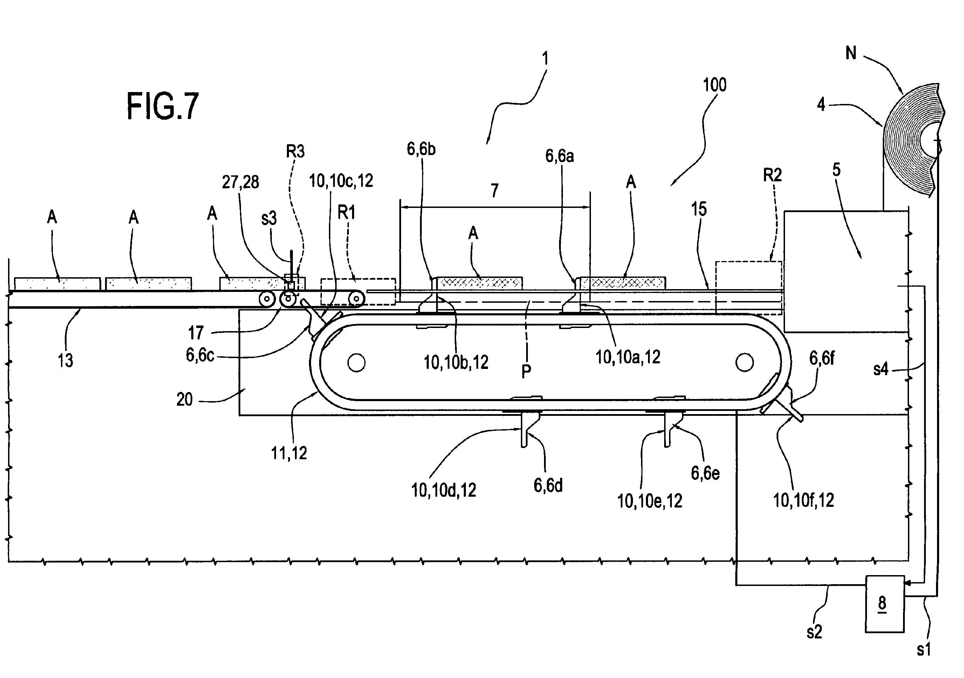

In the embodiment according to the invention and illustrated in Figure 7, each of the pushing and transfer means 6 comprises a rail 11 forming a looped path and a unit 10 movable along the rail 11 for transferring the groups of articles A from the pickup zone R1 to the release zone R2 along the conveying path P.

In light of this, it should be noted that this variant has a single rail 11 with which a plurality of units 10 movable along that single rail 11 are associated.

Each movable unit 10 is movable along the rail 11 independently of the other units 10 (that is to say, each unit 10 forms, in combination with the rail 11, one of the pushing and transfer means 6).

Also, each unit 10 is configured to form an abutment member for the article A.

For example, Figure 7 shows six independent units 10, individually labelled 10a, 10b, 10c, 10d, 10e, 10f.

These six independent units 10 form a plurality of pushing and transfer means 6 (each independent of the others), individually labelled 6a, 6b, 6c, 6d, 6e, 6f.

According to the invention, the rail 11 and each unit 10 constitute a linear motor 12 able to be activated to allow movement of the movable unit 10 along the closed loop path (and more specifically, along the conveying path P). In light of this, it should be noted that the rail 11 and the unit 10 comprise elements (controllable by the unit 8) adapted to generate a magnetic force and constituting the drives of the linear motor 12.

It should be noted that each unit 10 fulfils the same technical and functional purposes as those described above with reference to the abutment members 18. In effect, the unit 10 is adapted to come into abutment with an article A in the pickup zone R1 in order to transfer it to the release zone R2 in such a way that the article A is spaced from the one preceding it by a distance D*, corresponding to the release spacing.

In another variant **which is not part of the invention and** not illustrated, the machine 1 comprises a plurality of rails 11 with which corresponding units 10 are associated.

According to this variant, each rail 11 and the respective unit 10 movable on it constitutes a pushing and transfer means 6 (operating on the articles A in the same way as described above).

As described above, each rail 11 and the respective unit 10 constitute a linear motor.

It should also be noted that, according to this variant, each rail 11 is preferably not a rail of a closed loop type.

In effect, the rail 11 defines for the unit 10 a path that does not form a closed loop (preferably, the rail 11 is rectilinear and in any case defines a path between two opposite ends, at the pickup zone R1 and at the release zone R2).

Further, it should be noted that, according to this variant, the unit 10 is reciprocatingly movable between the pickup zone R1 and the release zone R2. More specifically, the unit 10 moves an article A along a stroke referred to as "forward stroke" from the pickup zone R1 to the release zone R2 and then moves in the opposite direction along a return stroke to reach the pickup zone R1 after releasing the article A to the packaging station.

Thus, the unit 10 is reciprocatingly movable along the rail 11 between the pickup zone R1 and the release zone R2.

It should be noted that, preferably, according to this variant, the unit 10 comprises an article A abutment member which is movable between an operating configuration and a non-operating configuration. More specifically, the abutment member is in the operating position when it conveys the article A (during the forward stroke from the zone R1 to the zone R2) and in the non-operating position during the return stroke from the release zone R2 to the pickup zone R1.

In other words, the non-operating position of the abutment member means that the abutment member, during the return stroke, does not interfere with the abutment members of the other units (movable on other rails). In the operating position, on the other hand, the abutment member is positioned in such a way that it can come into abutment with and push the article A along the conveying path towards the packaging station.

In accordance with the above, the unit 10 comprises means for moving the abutment member between the operating position and the non-operating position.

The machine 1 according to this variant is extremely compact and simple. Further, the fact that each unit 10 can be controlled / moved independently of the other unit 10 advantageously provides a high level of operating flexibility.

One advantage of the packaging machine 1 of the invention is that it allows the articles A to be packaged independently of the way the articles A themselves are fed to the machine 1.

In effect, the machine 1 is configured to release the articles A equally spaced from each other.

Lastly, the machine 1 is extremely efficient and reliable. In effect, releasing the articles A to the packaging station 5 equally spaced avoids the need to adjust the speed of the web N as a function of the flow of articles fed to the packaging station 5. On the contrary, the speed of the web N is kept constant and, as a function of that speed, the unit 8 controls and adjusts the speeds of the pushing and transfer means 6 so that they release the articles A to the packaging station 5 according to a preselected release spacing D*.

Further, the machine 1 is, extremely compact in plan. In effect, it should be noted that the conveying line 2 is preferably shorter than one metre in length.

The invention described above is susceptible of industrial application and may be modified and adapted in several ways without thereby departing from the scope of the claims. Moreover, all the details of the invention may be substituted by technically equivalent elements.

## Claims

1. A machine (1) **of the flow pack type** for packaging articles
(A) comprising:
- a packaging station (5) having film cutting means
- feed means (4) for feeding a film (N) to the packaging station (5), where the film (N) is used to wrap the articles (A),
- a conveying line (2) for conveying the articles (A) to the packaging station (5) along a conveying path (P) extending from a pickup zone (R1), where the articles (A) are picked up, to a release zone (R2), where the articles (A) are released, the conveying line (2) comprising at least two pushing and transfer means (6), being first means (6a) for pushing and transferring the articles (A) and second means (6b) for pushing and transferring the articles (A), respectively, the first (6a) and second (6b) pushing and transfer means being configured to pick up the articles (A) in turn at the pickup zone (R1) and being able to be driven independently, the conveying line (2) comprising a rail (11) forming a closed loop and each (6a; 6b) of the pushing and transfer means (6) comprising a unit (10a; 10b) movable along the rail (11) to transfer the articles (A) from the pickup zone (R1) to the release zone (R2) along the conveying path (P), the movable unit (10a; 10b) of each (6a; 6b) of the pushing and transfer means (6) and the rail (11) constituting, in combination, a linear motor (12) able to be activated to allow movement of the unit (10) along the closed loop; said rail (11) being a single rail (11) with which are associated the units (10a; 10b) of the pushing and transfer means (6); the machine (1) being **characterized in that** it comprises a control and drive unit (8) connected:
- to the film feed means (4) for receiving a signal (s1) representing a speed (v1) of film (N) feed,
- to the pushing and transfer means (6) for receiving a signal (s2) representing the positions in turn adopted by the pushing and transfer means (6),
- and to the packaging station (5) for receiving a phase signal (s4) representing the cyclical position of the film cutting means,
the control and drive unit (8) being programmed to drive each of the pushing and transfer means (6) in at least one portion (7) of the conveying path (P) according to a law of motion which is variable as a function of the signals (s1, s2, s4), for releasing the articles (A) at the release zone (R2) as a function of the phase signal of the film cutting means of the packaging station (5), at a distance (D*) from each other and at a controlled speed,
and wherein:
- the machine (1) comprises detecting means (28) for the articles (A), designed to allow an incoming article (A) to be detected as it reaches the conveying line (2), and connected to the control and drive unit (8) to generate a signal (s3) indicating the arrival of an article (A).

2. The machine according to claim 1, wherein the conveying line (2) further comprises third means (6c) for pushing and transferring the articles (A), the first (6a), second (6b) and third (6c) pushing and transfer means (6) being able to be driven independently and configured to pick up the articles (A) in turn at the pickup zone (R1).

3. The machine according to any of the preceding claims, wherein the conveying line (2) is provided with a supporting surface (15) for supporting the articles (A) moving along the conveying path (P).

4. The machine according to the preceding claim, wherein the supporting surface (15) has an opening (16) made in it which extends along the conveying path (P) and which opening (16) is engaged by the pushing and transfer means (6) when they come into abutment with the articles (A) along the conveying path (P) to push them along the supporting surface (15).

5. The machine according to any of the preceding claims, wherein the control and drive unit (8) is programmed to drive each of the pushing and transfer means (6) in at least one part of the portion (7) of the conveying path (P) according to an accelerated law of motion.

6. A method for packaging articles (A) comprising the steps of:
- feeding a film (N) used for wrapping the articles (A) at a packaging station (5);
- picking up the articles (A) at a pickup zone (R1) and transferring the articles (A) to a packaging station (5) along a conveying path (P) extending from a pickup zone (R1) to a release zone (R2), this picking up step being performed in turn by at least two pushing and transfer means (6), being first pushing and transfer means (6a) and second pushing and transfer means (6b); each of the pushing and transfer means (6c; 6b) comprising a unit (10a; 10b) movable along a rail (11) defining the conveying path (P) and forming a closed loop, the movement being activated by means of a linear motor (12) defined, in combination, by the rail (11) and the unit (10a; 10b) itself;
the method being **characterized in that** it comprises the following steps:
- adjusting the relative speed of article (A) transfer of the pushing and transfer means (6) along at least one portion (7) of the conveying path (P) as a function of a signal (s1) representing the feeding speed (v1) of film (N), of a signal (s2) representing the positions adopted in turn by the pushing and transfer means (6) and of a phase signal (s4) representing the cyclical position of film cutting means of the packaging station (5), for releasing the articles (A) at the release zone (R2) as a function of the phase signal (s4) of the film cutting means of the packaging station (5), at a distance (D*) from each other and at a controlled speed,
- detecting an incoming article (A) when it reaches the pickup zone (R1).

7. The method according to claim 6, wherein the pickup step is performed by the first pushing and transfer means (6a), by the second (6b) and by the third pushing and transfer means (6c) in turn.

## Patentansprüche

1. Maschine (1) vom Flowpack-Typ für Verpackungsartikel (A), umfassend:
- eine Verpackungsstation (5) aufweisend Folienschneidemittel,
- Zuführungsmittel (4) zum Zuführen einer Folie (N) zur Verpackungsstation (5), wobei die Folie (N) verwendet wird, um die Artikel (A) einzuwickeln,
- eine Förderanlage (2) zum Fördern der Artikel (A) zur Verpackungsstation (5) entlang eines Förderwegs (P), sich erstreckend von einem Aufnahmebereich (R1), in dem die Artikel (A) aufgenommen werden, bis zu einem Freigabebereich (R2), in dem die Artikel (A) freigegeben werden, wobei die Förderanlage (2) mindestens zwei Schiebe- und Übergabemittel (6) umfasst, wobei es sich um erste Schiebe- und Übergabemittel (6a) der Artikel (A) und um zweite Schiebe- und Übergabemittel (6a) der Artikel (A) handelt, wobei die ersten (6a) und die zweiten (6b) Schiebe- und Übergabemittel jeweils ausgelegt sind, um die Artikel (A) abwechselnd am Aufnahmebereich (R1) aufzunehmen, und in der Lage sind, unabhängig angetrieben zu werden, wobei die Förderanlage (2) eine Schiene (11) umfasst, bildend eine geschlossene Schleife, und jeweils ein jedes (6a; 6b) der Schiebeund Übergabemittel (6) eine Einheit (10a; 10b) umfasst, die entlang der Schiene (11) bewegbar ist, um die Artikel (A) vom Aufnahmebereich (R1) an den Freigabebereich (R2) entlang des Förderwegs (P) zu übergeben, wobei die bewegbare Einheit (10a; 10b) eines jeden (6a; 6b) Schiebe- und Übergabemittels (6) und die Schiene (11) in Kombination einen Linearmotor (12) bilden, der in der Lage ist, aktiviert zu werden, um die Bewegung der Einheit (10) entlang der geschlossenen Schleife zu ermöglichen, wobei es sich bei der Schiene (11) um eine einzelne Schiene (11) handelt, mit der die Einheiten (10a; 1b) der Schiebe- und Übergabemittel (6) verbunden sind, wobei die Maschine (1) **dadurch gekennzeichnet ist, dass** sie eine Steuer- und Antriebseinheit (8) umfasst, verbunden:
- mit den Folienzuführungsmitteln (4), um ein Signal (s1) zu empfangen, das eine Geschwindigkeit (v1) der Zuführung der Folie (N) darstellt,
- mit den Schiebe- und Übergabemitteln (6), um ein Signal (s2) zu empfangen, das die Positionen darstellt, die abwechselnd von den Mitteln zum Schieben und Übergeben (6) eingenommen werden,
- und mit der Verpackungsstation (5), um ein Phasensignal (s4) zu empfangen, das die zyklische Position der Folienschneidemittel darstellt, wobei die Steuer- und Antriebseinheit (8) programmiert wird, um ein jedes der Schiebe- und Übergabemittel (6) an mindestens eine Position (7) des Förderwegs (P) zu fahren, nach einem Bewegungsgesetzt, das abhängig von den Signalen (s1, s2, s4) variabel ist, um die Artikel (A) am Freigabebereich (R2) abhängig vom Phasensignal der Folienschneidemittel der Verpackungsstation (5) an einem Abstand (D*) voneinander und bei einer gesteuerten Geschwindigkeit freizugeben, und wobei:
- die Maschine (1) Erfassungsmittel (28) für die Artikel (A) umfasst, ausgestaltet, um zu erlauben, dass ein eingehender Artikel (A) erfasst wird, sobald er die Förderanlage (2) erreicht, und verbunden mit der Steuer- und Antriebseinheit (8), um ein Signal (s3) zu generieren, das die Ankunft eines Artikels (A) signalisiert.

2. Maschine nach Anspruch 1, wobei die Förderanlage (2) zudem dritte Mittel (6c) umfasst, um die Artikel (A) zu schieben und zu übergeben, wobei die ersten (6a), die zweiten (6b) und die dritten (6c) Schiebe- und Übergabemittel (6) in der Lage sind, unabhängig angetrieben und ausgelegt zu werden, um die Artikel (A) abwechselnd am Aufnahmebereich (R1) aufzunehmen.

3. Maschine nach einem der vorhergehenden Ansprüche, wobei die Förderanlage (2) mit einer Halteoberfläche (15) zur Halterung der Artikel (A), die sich entlang des Förderwegs (P) bewegen, versehen ist.

4. Maschine nach dem vorhergehenden Anspruch, wobei die Halteoberfläche (15) eine Öffnung (16) besitzt, die in ihr ausgebildet ist und sich entlang des Förderwegs (P) erstreckt, und wobei diese Öffnung (16) mit den Schiebe- und Übergabemitteln (6) in Eingriff gelangt, wenn diese an die Artikel (A) entlang des Förderwegs (P) anschlagen, um diese entlang der Halteoberfläche (15) zu schieben.

5. Maschine nach einem der vorhergehenden Ansprüche, wobei die Steuer- und Antriebseinheit (8) programmiert ist, um ein jedes der Schiebe- und Übergabemittel (6) in mindestens einen Teil des Abschnitts (7) des Förderwegs (P) gemäß einem beschleunigten Bewegungsgesetz zu fahren.

6. Verfahren zum Verpacken von Artikeln (A), umfassend folgende Schritte:
- Zuführen einer Folie (N), die eingesetzt wird, um die Artikel (A) an einer Verpackungsstation (5) einzuwickeln;
- Aufnehmen der Artikel (A) an einem Aufnahmebereich (R1) und Übergeben der Artikel (A) an eine Verpackungsstation (5) entlang eines Förderwegs (P), sich erstreckend vom Aufnahmebereich (R1) zum Freigabebereich (R2), wobei dieser Schritt zum Aufnehmen abwechselnd von mindestens zwei Schiebe- und Übergabemitteln (6) durchgeführt wird, wobei es sich um erste Schiebe- und Übergabemittel (6a) und um zweite Schiebe- und Übergabemittel (6b) handelt, wobei ein jedes der Schiebe- und Übergabemittel (6b, 6c) eine Einheit (10a, 10b) umfasst, die entlang einer Schiene (11) bewegbar ist, definierend den Förderweg (P) und bildend eine geschlossene Schleife, wobei die Bewegung durch einen Linearmotor (12) aktiviert wird, definiert in Kombination durch die Schiene (11) und die Einheit (10a; 10b),
wobei das Verfahren **dadurch gekennzeichnet ist, dass** es folgende Schritte umfasst:
- Einstellen der relativen Geschwindigkeit der Übergabe des Artikels (A) der Schiebe- und Übergabemittel (6) entlang mindestens eines Abschnitts (7) des Förderwegs (P), abhängig von einem Signal (s1), das die Zuführungsgeschwindigkeit (v1) der Folie (N) darstellt, von einem Signal (s2), das die Positionen darstellt, die abwechselnd von den Schiebe- und Übergabemitteln (6) eingenommen werden, und von einem Phasensignal (s4), das die zyklische Position der Folienschneidemittel der Verpackungsstation (5) darstellt, um die Artikel (A) an der Freigabestation (R2) freizugeben, abhängig vom Phasensignal (s4) der Folienschneidemittel der Verpackungsstation (5) an einem Abstand (D*) voneinander und bei einer gesteuerten Geschwindigkeit;
- Erfassen eines eingehenden Artikels (A), wenn dieser den Aufnahmebereich (R1) erreicht.

7. Verfahren nach Anspruch 6, wobei der Aufnahmeschritt von den ersten Schiebe- und Übergabemitteln (6a), von den zweiten (6b) und den dritten Schiebe- und Übergabemitteln (6c) abwechselnd durchgeführt wird.

## Revendications

1. Machine (1) de type à sacs thermo-soudés destinée à conditionner des articles (A) comprenant :
- un poste de conditionnement (5) ayant des moyens de découpe de film,
- des moyens d'alimentation (4) destinés à alimenter un film (N) à un poste de conditionnement (5), dans laquelle le film (N) est utilisé pour emballer les articles (A),
- une ligne d'acheminement (2) destinée à acheminer les articles (A) vers le poste de conditionnement (5) le long d'une trajectoire d'acheminement (P) se développant à partir d'une zone de ramassage (R1), où les articles (A) sont ramassés vers une zone de libération (R2), où les articles (A) sont libérés, la ligne d'acheminement (2) comprenant au moins deux moyens de poussée et de transfert (6) étant, respectivement, des premiers moyens (6a) destinés à pousser et à transférer les articles (A) et des seconds moyens (6b) destinés à pousser et à transférer les articles (A), les premiers (6a) et les seconds (6b) moyens de poussée et de transfert étant configurés pour ramasser les articles (A), à tour de rôle, au niveau de la zone de ramassage (R1) et pouvant être entraînés indépendamment, la ligne d'acheminement (2) comprenant un rail (11) formant une boucle fermée et chacun (6a ; 6b) des moyens de poussée et de transfert (6) comprenant une unité (10a ; 10b) mobile le long du rail (11) pour transférer les articles (A) de la zone de ramassage (R1) vers la zone de libération (R2) le long de la trajectoire d'acheminement (P), l'unité mobile (10a ; 10b) de chacun (6a ; 6b) des moyens de poussée et de transfert (6) et le rail (11) constituant, en combinaison, un moteur linéaire (12) pouvant être activé pour permettre le déplacement de l'unité (10) le long de la boucle fermée ; ledit rail (11) étant un rail unique (11) auquel sont associées les unités (10a ; 10b) des moyens de poussée et de transfert (6) ; la machine (1) étant **caractérisée en ce qu'**elle comprend une unité de commande et d'entraînement (8) reliée :
- aux moyens d'alimentation en film (4) pour recevoir un signal (s1) représentatif d'une vitesse (v1) d'alimentation en film (N),
- aux moyens de poussée et de transfert (6) pour recevoir un signal (s2) représentatif des positions adoptées, à tour de rôle, par les moyens de poussée et de transfert (6),
- et au poste de conditionnement (5) pour recevoir un signal de phase (s4) représentatif de la position cyclique des moyens de découpe du film, l'unité de commande et d'entraînement (8) étant programmée pour entraîner chacun des moyens de poussée et de transfert (6) dans au moins une partie (7) de la trajectoire d'acheminement (P) selon une loi de mouvement qui est variable en fonction des signaux (s1, s2, s4) pour libérer les articles (A) au niveau de la zone de libération (R2) en fonction du signal de phase des moyens de découpe du film du poste de conditionnement (5), à une certaine distance (D*) les uns des autres et à une vitesse contrôlée, et dans laquelle :
- la machine (1) comprend des moyens de détection (28) pour les articles (A), conçus pour permettre à un article entrant (A) d'être détecté dès qu'il atteint la ligne d'acheminement (2) et reliés à l'unité de commande et d'entraînement (8) pour générer un signal (s3) indicatif de l'arrivée d'un article (A).

2. Machine selon la revendication 1, dans laquelle la ligne d'acheminement (2) comprend de plus des troisièmes moyens de poussée (6c) destinés à pousser et à transférer les articles (A), les premier (6a), second (6b) et troisième (6c) moyens de poussée et de transfert (6) pouvant être entraînés indépendamment et configurés pour ramasser les articles (A), à tour de rôle, au niveau de la zone de ramassage (R1).

3. Machine selon l'une quelconque des revendications précédentes, dans laquelle la ligne d'acheminement (2) est dotée d'une surface de support (15) pour supporter les articles (A) se déplaçant le long de la trajectoire d'acheminement (P).

4. Machine selon la revendication précédente, dans laquelle la surface de support (15) possède une ouverture (16) réalisée en son sein qui se développe le long de la trajectoire d'acheminement (P) et dont l'ouverture (16) se met en prise avec les moyens de poussée et de transfert (6) lorsqu'ils viennent buter contre les articles (A) le long de la trajectoire d'acheminement (P) pour les pousser le long de la surface de support (15).

5. Machine selon l'une quelconque des revendications précédentes, dans laquelle l'unité de commande et d'entraînement (8) est programmée pour entraîner chacun des moyens de poussée et de transfert (6) dans au moins une partie de la portion (7) de trajectoire d'acheminement (P) selon une loi de mouvement accéléré.

6. Procédé de conditionnement d'articles (A) comprenant les étapes de :
- alimenter un film (N) utilisé pour emballer les articles (A) au niveau d'un poste de conditionnement (5) ;
- ramasser les articles (A) au niveau d'une zone de ramassage (R1) et transférer les articles (A) vers un poste de conditionnement (5) le long d'une trajectoire d'acheminement (P) se développant d'une zone de ramassage (R1) à une zone de libération (R2), cette étape de ramassage étant effectuée, à son tour, par au moins deux moyens de poussée et de transfert (6) étant des premiers moyens de poussée et de transfert (6a) et des seconds moyens de poussée et de transfert (6b) ; chacun des moyens de poussée et de transfert (6b, 6c) comprenant une unité (10a; 10b) mobile le long d'un rail (11) définissant la trajectoire d'acheminement (P) et formant une boucle fermée, le déplacement étant activé par le biais d'un moteur linéaire (12) défini, en combinaison, par le rail (11) et l'unité (10a ; 10b) elle-même ;
le procédé étant **caractérisé en ce qu'**il comporte les étapes suivantes :
- régler la vitesse relative du transfert des articles (A) des moyens de poussée et de transfert (6) le long d'au moins une partie (7) de la trajectoire d'acheminement (P) en fonction d'un signal (s1) représentatif de la vitesse d'alimentation (v1) en film (N), d'un signal (s2) représentatif des positions adoptées, à tour de rôle, par les moyens de poussée et de transfert (6) et d'un signal de phase (s4) représentatif de la position cyclique des moyens de découpe de film du poste de conditionnement (5), pour libérer les articles (A) au niveau de la zone de libération (R2) en fonction du signal de phase (s4) des moyens de découpe du film du poste de conditionnement (5), à une certaine distance (D*) les uns des autres et à une vitesse contrôlée ;
- détecter un article entrant (A) lorsqu'il atteint la zone de ramassage (R1).

7. Procédé selon la revendication 6, dans lequel l'étape de ramassage est effectuée par les premiers moyens de poussée et de transfert (6a), par les seconds (6b) et par les troisièmes moyens de poussée et de transfert (6c), à tour de rôle.
